# EUROPEAN PATENT APPLICATION

(11) **EP 2 442 229 A1**
(43) Date of publication of application: **18.04.2012**
(21) Application number: 10007865.8
(22) Date of filing: 28.07.2010
(51) Int. Cl.: G06F 11/18

(54) **High reliability method of data processing, and controller unit**

(71) Applicant: SIEMENS AKTIENGESELLSCHAFT, 80333 München (DE); Friedrich-Alexander-Universität, 91054 Erlangen (DE)
(72) Inventor: Schmid, Reiner, Dr., 80538 München (DE); Sobolev, Sergey, Dr., 197374 Saint-Petersburg (RU); Ulbrich, Peter, 91052 Erlangen (DE)

(57) **Abstract**

The present invention provides a method of data processing taking place in a controller that ensures that the voting operations taking place in the controller are reliably performed error free and a corresponding controller unit. In accordance with the present invention, the method of the invention is further characterised by the input data being characteristic for the particular application where voting occurs. Voting whether or not the incoming data is correct involves at least one of a voting comparison method, a voting average method, and checking for a difference being within a certain range. The time dependent signature is indicative of the input data being correctly transmitted or not. Voting, based on the reviewed signature characteristics is an encoded operation. The time dependent signature is indicative if the data is coming from a correct source, is indicative if there has been a modification of the input data, and is indicative of correct timing slides. Voting whether or not the incoming data is correct is performed in an encoded manner. A correct data is transmitted to be further used to actuate an actuator. The erroneous data is transmitted to be further sent to a fail safe guard.

## Description

### FIELD OF THE INVENTION

The invention relates generally to a method of data processing, and particularly but not exclusively relates to a method of data processing, an electronic controller unit and a computer program product, all employed to ensure high-reliability voting for redundant calculations.

### BACKGROUND OF THE INVENTION

A microcontroller is known in the art as being a small computer on a single integrated circuit containing a processor core, memory, and programmable input/output peripherals. Program memory in the form of NOR flash or OTP ROM is also often included on the integrated circuit, as well as a small amount of RAM. Microcontrollers are designed for embedded applications. Microcontrollers are used in automatically controlled products and devices, such as automobile engine control systems, implantable medical devices, remote controls, office machines, appliances, power tools, and toys. By reducing the size and cost compared to a design that uses a separate microprocessor, memory, and input/output devices, microcontrollers make it economical to digitally control even more devices and processes. Mixed signal microcontrollers are common, integrating analog components needed to control non-digital electronic systems.

When microcontrollers are used for safety critical functions, the applicable standards require a certain level of reliability to be fulfilled. An example of use in connection with safety critical functions is in chemical processing, the monitoring of various values in the plant based on which the process may be steered and the processes managed. A further example of use in connection with safety critical functions is in electrical devices, regarding their monitoring and correction of signals. A further yet example is the monitoring of processes in the nuclear plants.

For high safety functions, e.g. functions being subject to safety integrity level 3 categorization according to IEC61508 standard, with a Probability of Failure on Demand between 0.001-0.0001 and a required probability of dangerous failure per hour of less than 10^ (-7), it has been observed that the probabilistic requirements are so stringent that a single microcontroller cannot provide the required reliability. This is in part due to the possibility of occurrence of temporary or permanent errors, occurring in the microcontrollers if programmed without additional precautions, or due to structural problems of the microcontroller, or due to outside influences such as cosmic radiation that causes undesirable bit flips in the microcontroller.

It has been further observed that COTS microcontrollers (commercial of the shelf microcontrollers) offer the required sufficient reliability in order to comply with the probabilistic requirements of the target failure measures imposed by the safety integrity levels 3 or 4, without additional safety precautions to be taken regarding the COTS microcontrollers. Therefore, a problem exists when COTS microcontrollers are intended to be used in connection with safety critical applications.

To address this problem and provide for the use of COTS microcontrollers in safety critical applications, additional precautions have been taken in the art in the form of pure hardware based solutions, temporal redundancy improvement and control methods. The solutions that aim to alter the hardware of the COTS microcontroller offer only limited flexibility and need to be tailored for each specific purpose, eliminating therefore the cost advantages of using COTS microcontrollers. The solutions that propose temporal redundancy improvement suggest to use encoded channels to compare with un-encoded calculations. The actual comparisons however, are performed only in un-encoded form which leaves opened exactly the same weaknesses in reliability that were present originally in the COTS microcontroller. Other solutions aim at detecting the divergent operation of the COTS microcontroller and preventing any transition from a restrictive state to a permissive state in the event of a divergent event occurrence.

Therefore the solutions referred to above still do not provide for sufficient reliability of use of COTS microcontrollers in high safety critical functions.

Therefore, a problem remains of how to provide for the COTS microcontrollers used in high safety critical functions sufficient reliability, so that they may be used reliably in connection with high-safety critical functions, without performing hardware alterations of the COTS microcontrollers.

### BRIEF SUMARY OF THE INVENTION

The present invention provides a solution to the above problems by providing at least a method of data processing taking place in the microcontroller, that ensures that the voting operations taking place in the microcontroller are reliably performed error free.

The present invention solves the above referenced technical problem by providing the method of data processing of claim 1, the controller unit of claim 13, and the computer program product, loadable in a controller unit of claim 20.

In accordance with an embodiment of the present invention it is envisioned a method of data processing that comprises the steps of arithmetically encoding input data with a time dependent signature, reviewing the characteristics of the time dependent signature of the encoded incoming data, voting, based on the reviewed signature characteristics, whether or not the incoming data is correct, and if the incoming data is correct, transmitting a correct data to be further employed as actuating data, and if the incoming data is incorrect, transmitting the erroneous data to be further monitored externally.

In accordance with another embodiment of the present invention it is envisioned a controller unit, comprising data capturing and multiplexing means, responsive to input data, the data capturing and monitoring means being adapted to change the input data into multiplexed data, a plurality of data processing means receiving the multiplexed data and outputting processed data that is arithmetically encoded with a time dependent signature, a voter means receiving the plurality of encoded data and adapted to decide whether or not the incoming data is correct, and if the incoming data is correct, the incoming data being transmitted to an actuator, and a fail safe guard receiving the incoming data if the incoming data is incorrect.

In accordance with a further embodiment of the present invention it is envisioned a computer program product, loadable in a controller unit for a real time data processing, the computer product, when executed in the controller unit, being able to arithmetically encode input data with a time dependent signature, review the characteristics of the time dependent signature of the encoded incoming data, vote, based on the reviewed signature characteristics, whether or not the incoming data is correct, and if the incoming data is correct, transmit a correct data to be further employed as actuating data, and if the incoming data is incorrect, transmit the erroneous data to be further monitored externally.

The present invention proposes at least a combination of temporal redundant calculations with the use of coded processing for voting, to close the gap in previous approaches to this problem. The combination of the application of coded processing for voting with encoding the end result within the redundant tasks is offering the required high reliability characteristics expected from the microcontroller. Compared to other solutions offered in the art, the solution provided by the present invention reduces the computational overhead performed in the controller unit by performing a fully encoded calculation of at least one of the tasks. As a further measure to ensure reliability the invention provides for protecting the step of comparison itself by working with encoded values. At the same time, the present invention provides for automatic task completion monitoring, as any interrupted task would not be able to produce correctly encoded values for comparison, and thus provides for a further measure of reliability.

Other characteristics and advantages of the present invention will be apparent in connection with the dependent claims.

In accordance with the present invention, the method of the invention is further characterised by the input data being characteristic for the particular application where voting occurs and wherein the input data is resultant from redundant processing. Voting whether or not the incoming data is correct involves at least one of a voting comparison method, a voting average method, and checking for a difference being within a certain range. The time dependent signature is indicative of the input data being correctly transmitted or not. Voting, based on the reviewed signature characteristics is an encoded operation. The time dependent signature is indicative if the data is coming from a correct source, is indicative if there has been a modification of the input data, and is indicative of correct timing slides. Voting whether or not the incoming data is correct is performed in an encoded manner. A correct data is transmitted to be further used to actuate an actuator. The erroneous data is transmitted to be further sent to a fail safe guard. The fail safe guard independently checks the signature, so if the voter does not function properly, this is detected by a failure to validate the signature.

In accordance with the present invention, in the controller unit the plurality of data processing means comprises at least three data processing means. The controller unit further comprises an external monitor means that receives the data if check may not be performed by the voter that incoming data is correct. If the signature of the voting result is not correct, the fail guard sets the output lines to a fail-safe state, thus preventing the wrong output to be distributed if the voter should not work correctly. If the incoming data is not correct the fail safe guard is put to 0. The actuator is external to the electronic controller unit. The controller unit may further comprise a coded processing module that may comprise the voter.

Via the method of the present invention, transient faults may be reliably detected and they may be distinguished from permanent faults. Further, the present invention offers a solution for realizing reliable redundancy in a safe way. The present invention also facilitates the use of multi-core controllers, which due to their architecture do not provide strict guarantees for timing properties. Correct timing is also checked as part of the voting procedure and is therefore effectively monitored.

### BRIEF DESCRIPTION OF THE SEVERAL VIEWS OF THE DRAWINGS

The present invention together with the above and other objects and advantages may best be understood from the following detailed description of the preferred embodiments of the invention illustrated in the drawings.

FIG. 1 portrays a controller unit in accordance with an embodiment of the present invention,

FIG. 2 portrays a flow chart of the method of the present invention.

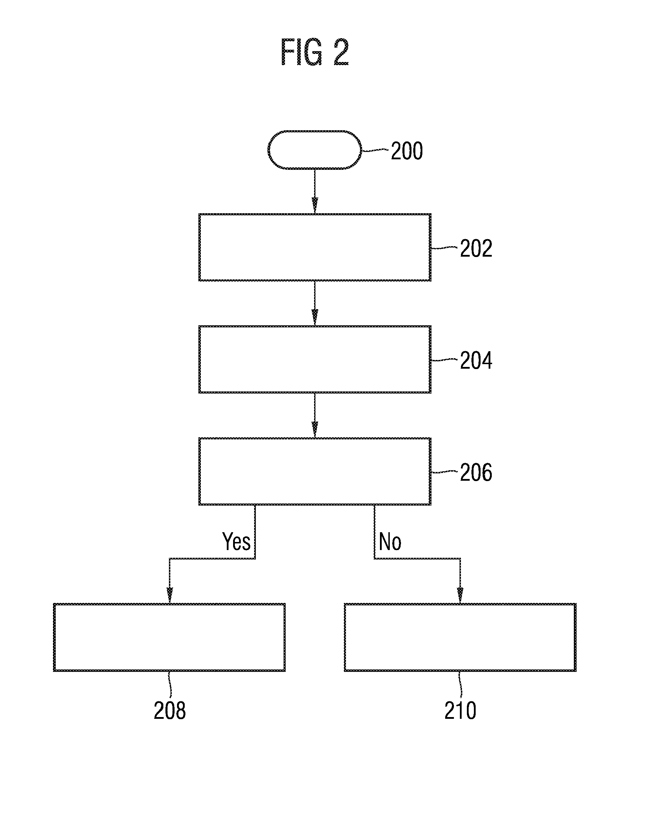

In Fig. 2 the order of description should not be construed as to imply that these operations are necessarily order-dependent.

Non-limiting and non-exhaustive embodiments of the present invention are described with reference to the above referenced figures, wherein like reference numerals refer to like parts throughout the various views unless otherwise specified.

### DETAILED DESCRIPTION OF THE INVENTION

Embodiments of a method of data processing, of a controller unit and a computer program product loadable in a controller unit are described herein.

In the following description, numerous specific details are provided for understanding the embodiments of the present invention. One skilled in the relevant art will recognize, however, that the invention can be practiced without one or more of the specific details, or with other steps, methods, systems, components, materials, etc. In other instances, well-known structures, materials, system components, or steps of methods are not shown, or if shown are not described in detail, to avoid obscuring aspects of the invention.

Reference throughout this specification to "one embodiment" or "an embodiment" means that a particular feature, structure, step, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, steps, or characteristics may be combined in any suitable manner in one or more embodiments.

Redundancy is an important measure to ensure the increased reliability of technical devices. By using redundant calculations a considerable amount of errors can be detected by comparison of the results of different calculations or devices. In computing, for example by triple modular redundancy (TMR) is understood a fault tolerant form of N-modular redundancy, in which three systems perform a process and that result is processed by a voting system to produce a single output. If any one of the three systems fails, the other two systems can correct and mask the fault. If the voter fails then the complete system will fail. However, in a good TMR system the voter is much more reliable than the other TMR components. Alternatively, if there is another stage of TMR logic following the current one then three voters are used - one for each copy of the next stage of logic. The TMR concept can be applied to many forms of redundancy, such as software redundancy in the form of N-version programming. For example, 5-modular redundancy communication systems uses the majority of 5 samples - if any 2 of the 5 results are erroneous, the other 3 results can correct and mask the fault.

In case of at least 3 time redundant calculations even error compensation is possible thus eliminating erroneous calculations from occurring. However the obtainable reliability is limited by the reliability of the voting device. The theoretically achievable reliability by establishing a result by a majority vote on the different inputs is much higher than a single channel result. This would in principle allow the total systems reliability to exceed the probability of failure limited by non-reliability of a single device.

If the probability for an error in one channel is x, then the probability for n channels leading a wrong majority vote is approximately n*x(n-1), while assuming errors to be independent. However, this is only valid if the voter is more reliable than this expression. In reality the likelihood of the voter producing a wrong result is roughly in the same order of magnitude if it is realized by commodity hardware via the of COTS microcontrollers. For COTS microcontrollers, due to cosmic radiation, instabilities in voltage of a power supply, etc., the likelihood for an error to occur is already more higher than the limits imposed by the probabilistic SIL 3 requirements of the IEC 61508 standard "Functional safety of electrical/electronic/programmable safety related systems".

The limitations with respect to reliability of commercially available hardware therefore reach the level where they have significant impact for safety critical applications. However, specific hardware design that offers extremely high reliability is expensive and difficult to deal with. The technical challenge is to use commodity hardware for building the voting device in a way that reaches the required levels of reliability without having to resort to custom made hardware or excessively complicated and costly hardware implementations of the voting device. In particular the availability of multi-core architectures integrated on a single chip poses issues regarding how to realize safety-critical architectures of these devices and how to best make use of their capability for parallel processing for safety critical functions.

In this respect the present invention provided a solution by providing at least a method of data processing taking place in the microcontroller that ensures that the voting operations taking place in the microcontroller are reliably performed error free.

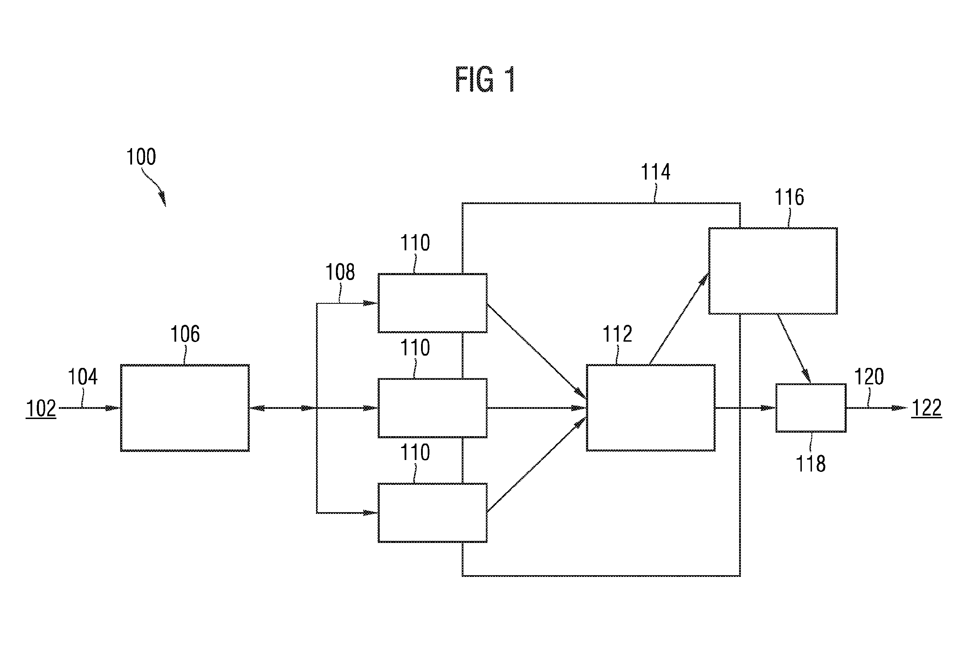

Referring now to FIG. 1, the figure portrays a controller unit in accordance with an embodiment of the present invention.

Controller unit 100 is illustrated in Fig. 1 as receiving input data 104 from a reliable data source 102 (not illustrated). The input data 104 is received by a data capturing and multiplexing means 106 that is processing the received input data and is adapted, among others, to change the input data 106 into multiplexed data 108.

A plurality of processing means 110 receive the multiplexed data 108 and are adapted to process the data 108 into arithmetically encoded data, preferably encoded with a time dependent signature.

The encoded data is fed from each of the data processing means to a voter means 112. In one embodiment of the present invention the plurality of data processing means 110 and the voter means 112 are comprised by a coded processing module 114. In a further embodiment of the present invention, the plurality of data processing means is external to the coded processing module 114, that may comprise the voter means 112.

An external monitor means 116 and a fail safe guard means 118 are also comprised by the controller unit 100. Data 120 fed either from the external monitor means 116 or the fail safe guard means 118 is provided to actuators 122 (not shown in the figure).

Controller 100 periodically processes input data from a reliable source 102 and aims to provide reliable output data 120 based on the input data 102 and data from previous calculation cycles. Data from previous calculation cycles is obtained for example by storing input from previous cycles, or storing data calculated as part of the control algorithm.

Input data 104 is multiplexed via data capturing and multiplexing means 106 to be processed by different channels, the number of the channels being chosen so that sufficient reliability is achieved. The results of the calculations in the respective channels are encoded at the end of the calculation using arithmetic encoding, preferably with a time dependent signature. Various modes of realizing the arithmetic encoding with time dependent signature are know in the art. One such procedure is discussed by P. Forin, "Vital coded microprocessor principles and application for various transit systems", and it will not be further elaborated upon in this document. In the embodiment of the present invention illustrated in Fig. 1 the channels are realized on the same controller via a plurality of data processing means 110, but it is within the scope of the present invention as well to realize the channels on different controller and also on different cores of a multi-core controller.

The embodiment of the present invention discussed in connection with Fig. 1 is implemented with a number of three data processing units 110, three being a minimum number of data processing units necessary for realizing the object of the invention. A number of minimum three values are necessary to be compared in a voter 112. The more values are available for comparison, the higher the probability of error detection.

Voter means 112 receives the encoded data from units 110 and performs voting using a software that is capable of performing comparisons and arithmetic operations, etc. The voting occurs coded processing of the arithmetically encoded input data which enables the voter to detect errors in a completely reliable way up to any desired degree of reliability by just choosing the encoding size big enough. The voter may employ a voting comparison method, a voting average method or a checking for a difference being in a certain range method.

In the case that the voter detects an issue with non agreeing input parameters, by using a fault tree analysis it is shown if the malfunctions are either temporary or permanent. This is achieved by storing events of non-agreeing inputs in the voter including details which channels are affected over multiple time slices of the control loop. If a channel is repeatedly affected the conclusion can be drawn that a malfunction is permanent. The results of a fault tree analysis may be further used to track down the root case of the malfunction by using additional diagnosis facilities present in the system.

If it is shown that a temporary failure has occurred, the calculation is repeated and as well the voting regarding the results. If in the second calculation round the results agree the failure may be considered temporary. It is assumed that a common cause failure for the result to be erroneous is by several magnitudes less likely than required by the intended safety level. This relates to the case that the repeated calculation could be erroneous due to a spread of the original failure to the other calculation channels, leading to the exactly same error in a majority of channels (others would be detected by the voting). A Fault Tree Analysis shows that this is very unlikely unless in exceptional cases, so that it does not need to be considered as a possibility.

If a repeated calculation and voting again leads to erroneous results, the malfunction may be considered permanent, such as due to hardware defects, and the voting device activates a fail-safe state by switching of and notifying connected system components.

In a preferred embodiment of the present invention, data is transmitted to an external independent controller or external monitor 116, which may be implemented as a considerably less powerful than the one used for processing, which is able to check the correctness of the signature independently from the processing done on controller 100. If either the controller 100 or the external monitor 116 detects an error the fail safe mode of the controller is activated. The independent controller 116 is also able to check if the correct timing as for the encoding a time-dependent part can be employed.

Via the controller 100 the present invention permits detection regarding the completion of redundant tasks by verifying the signature of their output data. The time dependent signature is indicative among others of the input data being correctly transmitted or not, if the data is coming from a correct source, if there has been a modification of the input data, or if the data is from a correct timing slide. Also, any pre-completion interruption of the tasks is detected as the output data would not conform to the expected signature.

Via the controller 100 the present invention, whose redundant calculations widely protect from transient errors, permanent errors may be detected that affect the calculation. By diverse calculations the error detection rate cab even be increased as the error correlation between channels is reduced.

If based on the reviewed signature characteristics, it is established that the incoming data is correct, the correct data to be further employed as actuating data 120 being transmitted via the fail safe guard means 118 to actuators 122. If the incoming data is incorrect, the erroneous data is transmitted to be further monitored externally.

In accordance with a further embodiment of the present invention, the various channels do not have to be homogeneously encoded as described above, but they may be heterogeneously encoded. This feature is in particular useful for the application of the invention in multi-core platforms, where a certain hardware separation is achieved, avoiding therefore that the same error leads to a simultaneous error in all the redundant calculations, error which would otherwise not be detected. The different channels may be implemented using SW diversity in different flavors. The different channels can be programmed using different encoding means, different implementation of the algorithms (SW diversity), using different arithmetic units and/or memory segments of the microprocessor.

Should the present invention be used in an embodiment that uses a multi-core controller, the present invention permits the assessment of proper scheduling of the involved tasks, which in itself is a solution to the problem of relative non-predictability of the timing schedule in presently available multi-core architectures. In this embodiment of the invention the redundant tasks are distributed to different cores by which a further reduction of possible common cause errors is possible. The applied encoding also enable the voter to check if the task has been successfully completed because the data can easily be detected as non-valid.

Although in the preceding description apparatus 100 has been referred to as a controller, the present invention may be implemented as well via a micro controller, microprocessor, Field Programmable Gate Array (FPGA) or custom made chip. Other possible implementations will be apparent for the person skilled in the art, implementations that are all understood to be comprised within the scope of the present invention. The implementation of the data capturing/multiplexing means may be realized via and on a microprocessor as well as the other entities mentioned, and the fail safe guard is a simple hardware device interrupting or putting the output lines to predefined safe level.

Referring now to FIG. 2, FIG. 2 portrays a flow chart of the method of the present invention.

In connection with FIG. 2 various operations will be described as multiple discrete steps that are steps performed in turn in a manner that is most helpful in understanding the present invention. However, the order of description should not be construed as to imply that these operations are necessarily order dependent, in particular, the order the steps are presented. Any necessary ordering is alternatively expressly mentioned or will be understood by those skilled in the art.

In accordance with a further embodiment of the present invention, a method 200 of data processing is proposed. Method 200 comprises at least the steps of arithmetically encoding input data 202 with a time dependent signature, reviewing 204 the characteristics of the time dependent signature of the encoded incoming data, and voting 206, based on the reviewed signature characteristics, whether or not the incoming data is correct. If the incoming data is correct, then in a subsequent transmitting step 208 the correct data is further employed as actuating data, and if the incoming data is incorrect, then in a subsequent transmitting step 210, the erroneous data is to be further monitored externally.

As previously discussed the voter is performing a check of the signature of the encoded data and the result of that check indicated if an error is present or not. If an error is present or the signature may not be checked, the data is sent to an external monitoring means. If the data is not correct the switch guard is activated, and the second lines are put to 0. the actuator will not receive any data and appropriate actions remain to be defined. This way it is ensured that no erroneous output is produced. This versus the case when no error is detected and the data is sent via the fail safe means to the actuators.

As discussed above, the present invention proposes at least the combination of temporal redundant calculations with the use of coded processing for voting, to close the gap in previous approaches to this problem. The combination of the application of coded processing for voting with encoding the end result within the redundant tasks is offering the required high reliability characteristics expected from the microcontroller.
Using encoding calculations enables error detection with any required probability, then it means that the microcontroller which executes such encoding program will not give incorrect output with corresponding probability.

Compared to other solutions offered in the art, the solution provided by the present invention reduces the computational overhead performed in the controller unit by performing a fully encoded calculation of at least one of the tasks. The present invention does not require the calculations to be performed in an encoded way, only the results of a calculation channel are encoded, and the voting is done by using encoded voting. As a further measure to ensure reliability, the invention provides for protecting the step of comparison itself by working with encoded values. At the same time, the present invention provides for automatic task completion monitoring , as any interrupted task would not be able to produce correctly encoded values for comparison, and thus provided for a further measure of reliability a calculation is not completed, or erroneously input is provided to the voter from a wrong source, the signature check of the provided values leads to an assert failure. This means the above mentioned faults can be reliably detected. The likelihood that a not correctly completed calculation provides a result fitting to the expect signature can be made as low as required by increasing the arithmetic encodings width. The same is true for input from a wrong source.

Via the method of the present invention, transient faults may be reliably detected and they may be distinguished from permanent faults. They may be distinguished reliably distinguished from permanent faults. Further, the present invention offers a solution for realizing reliable redundancy in a safe way. The present invention also facilitates the use of multi-core controller, which due to their architecture do not provide strict guarantees for timing properties. Correct timing is also checked as part of the voting procedure and is therefore effectively monitored. Timing is checked by introducing timing value into codeword. If a timestamp is not introduced/updated or incorrect, this will trigger an error.

In accordance with another embodiment of the present invention it is envisioned a computer program product, loadable in a controller unit for a real time data processing, the computer product, when executed in the controller unit, being able to arithmetically encode input data with a time dependent signature, review the characteristics of the time dependent signature of the encoded incoming data, vote, based on the reviewed signature characteristics, whether or not the incoming data is correct, and if the incoming data is correct, transmit a correct data to be further employed as actuating data, and if the incoming data is incorrect, transmit the erroneous data to be further monitored externally.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize.

These modifications can be made to the invention in light of the above detailed description. The terms used in the following claims should not be construed to limit the invention to the specific embodiments disclosed in the specification and the claims. Rather, the scope of the invention is to be determined entirely by the following claims, which are to be construed in accordance with established doctrines of claim interpretation.

## Claims

1. A method of data processing, comprising the steps of:
arithmetically encoding input data with a time dependent signature;
reviewing the characteristics of the time dependent signature of the encoded incoming data;
voting, based on the reviewed signature characteristics, whether or not the incoming data is correct, and
if the incoming data is correct, transmitting a correct data to be further employed as actuating data, and
if the incoming data is incorrect, transmitting the erroneous data to be further monitored externally.

2. The method of data processing of claim 1, wherein the input data is characteristic for the particular application where voting occurs, and wherein the input data is resultant from redundant processing.

3. The method of data processing of claim 1, wherein voting whether or not the incoming data is correct involves at least one of a voting comparison method, a voting average method, and checking for a difference being within a certain range.

4. The method of data processing of claim 1, wherein voting, based on the reviewed signature characteristics is an encoded operation.

5. The method of data processing of claim 1, wherein the time dependent signature is indicative if the input data being correctly transmitted or not.

6. The method of data processing of claim 1, wherein the time dependent signature is indicative if the data is coming from a correct source.

7. The method of data processing claim 1, wherein the time dependent signature is indicative if there has been a modification of the input data.

8. The method of data processing of claim 1, wherein the time dependent signature is indicative of correct timing slides.

9. The method of data processing of claim 1, wherein voting whether or not the incoming data is correct is performed in an encoded manner.

10. The method of data processing of claim 1, wherein a correct data is transmitted to be further used to actuate an actuator.

11. The method of data processing of claim 1, wherein the erroneous data is transmitted to be further sent to a fail safe guard.

12. The method of data processing of claim 11, wherein the fail guard performs an independent check of the signature.

13. A controller unit, comprising:
data capturing and multiplexing means, responsive to input data,
said data capturing and multiplexing means being adapted to change the input data into multiplexed data;
a plurality of data processing means receiving said multiplexed data and adapted to process said data into arithmetically encoded data with a time dependent signature;
a voter means receiving the plurality of encoded data and
adapted to decide whether or not the incoming data is correct,
wherein if the incoming data is correct, said incoming data is transmitted to an actuator, and
a fail safe guard receiving the incoming data, if the incoming data is incorrect.

14. The controller unit of claim 13, wherein said plurality of data processing means comprises at least three data processing means.

15. The controller unit of claim 13, further comprising an external monitor means that receives the data if check may not be performed by the voter that incoming data is correct.

16. The controller unit of claim 13, wherein if the signature of the voting result is not correct, the fail guard sets the output lines to a fail-safe state.

17. The controller unit of claim 13, wherein the actuator is external to the electronic controller unit.

18. The controller unit of claim 13, further comprising a coded processing module.

19. The controller unit of claim 18, wherein the coded processing module comprises the voter.

20. A computer program product, loadable in a controller unit for a real time data processing, said computer product, when executed in said controller unit, being able to realize the method of claims 1 to 11.
